## Europäisches Patentamt

**European Patent Office**

**Office européen des brevets**

(11) Publication number : **0 379 752 B1**

# EUROPEAN PATENT SPECIFICATION

(45) Date of publication of patent specification :
**13.05.92 Bulletin 92/20**

(51) Int. Cl.⁵ : **A01J 25/13**

(21) Application number : **89203305.1**

(22) Date of filing : **21.12.89**

(54) **Plastic cheese vat with a plastic inner mould and suitable follower.**

(30) Priority : **30.12.88 NL 8803215**

(43) Date of publication of application :
**01.08.90 Bulletin 90/31**

(45) Publication of the grant of the patent :
**13.05.92 Bulletin 92/20**

(84) Designated Contracting States :
**BE DE ES FR GB NL**

(56) References cited :
EP-A- 0 224 307
DE-A- 2 317 594
DE-B- 1 140 012
GB-A- 1 161 426

(73) Proprietor : **CRELLIN B.V.**
**24, Nikkelstraat**
**NL-3067 GR Rotterdam (NL)**

(72) Inventor : **Tameris, Hendrikus Matheus**
**81c, Verboomstraat**
**NL-3082 JC Rotterdam (NL)**

(74) Representative : **van der Veken, Johannes**
**Adriaan et al**
**EXTERPATENT B.V. P.O. Box 90649**
**NL-2509 LP 's-Gravenhage (NL)**

EP 0 379 752 B1

Jouve, 18, rue Saint-Denis, 75001 PARIS

## Description

The invention relates to a cheese vat of plastic material cooperating with at least one cheese vat accessory secured to said cheese vat in such a way that they are tightly connected by connecting means.

A cheese vat of the above-mentioned type in accordance with the prior art portion of claim 1 is known from DE-B-1140012. This known cheese vat with a top edge is provided with a removable, moisture-permeable gauze-type inner mould, also made of plastic and being retained by an inner mould retaining ring.

Since, on the one hand, the placing of a cheese vat inner mould in the cheese vat and fastening thereof on the top side is labour-intensive and, on the other hand, through a part of a top flange projecting beyond the cheese vat, an assembly of the cheese vat and inner mould is difficult to handle and gives problems with automation, while the inner mould can also be pulled out of the cheese vat at undesirable times, fixing means in the form of an annular rib disposed on the inner mould retaining ring snap into a groove provided in the inside wall of the cheese vat (vide EP-A-0 224 307).

This leads to a situation in which at the top side of the cheese vat the inner mould retaining ring lies with slight play opposite the inside wall of a cheese vat, which means that there is a risk of whey residues or curd residues being left behind between the inside wall of the cheese vat and the opposite wall of the retaining ring. Removal of these residues is generally-very difficult, so that it is regularly necessary to remove the entire inner mould with retaining ring from the cheese vat in order to clean the cheese vat. This is, of course, a great disadvantage in automated cheese preparation.

The object of the invention is now to provide a plastic cheese vat of the above-mentioned type not showing these advantages, and whey residues or curd residues lying between cheese vat and retaining ring can be flushed away.

This object is achieved according to the invention is that one or more flushing chambers are arranged in the immediate vicinity of the connecting means between a cheese vat wall and the nearest opposite wall part of the cheese vat accessory.

By using such a flushing chamber it is possible, on the one hand, to make the gauze-type cheese inner mould cooperates permanently tightly with the cheese vat while, on the other hand, impeccable removal of curd residues or whey residues accumulating between the retaining means for the inner mould and the cheese vat wall is ensured.

For the simple formation of a flushing chamer, at least one spacer is expediently present between a wall part of a cheese vat and the nearest opposite wall part of a cheese vat accessory.

It is particularly advantageous for the cheese vat accessory to comprise a gauze-type inner mould provided with connecting means engaging into a recess disposed in the wall of the cheese vat.

This, on the one hand, ensures a good tight cooperation and fixing of the cheese vat inner mould relative to the cheese vat while, on the other hand, a very good cleaning of the assembly of cheese vat and inner mould is possible without removal of the inner mould.

The inventive idea of forming a flushing chamber can also be used with particular advantage in a plastic cheese vat which cooperates on the outside with a supporting ring which is used during the stacking of cheese vats in a curd press

For this, the cheese vat accessory is preferably a supporting ring which is situated around the outside of the cheese vat and is provided with fixing means which snap into recesses, while spacing ribs form a flushing chamber between the inside of the supporting ring and the outside of the cheese vat.

The flushing chambers here too ensure optimum cleaning of cheese vat and supporting ring without removal of the supporting ring.

The invention also relates to a follower suitable for use in a cheese vat according to the invention, comprising a bottom follower part being connected to a top follower part by connecting means, said follower being characterized in that one or more flushing chambers are arranged in the immediate vicinity of the connecting means between a wall of a bottom follower part and the nearest opposite wall part of the top follower part.

In this way the follower can be cleaned without removal of parts.

The invention will now be explained in greater detail with reference to an example of an embodiment shown in the drawing, in which:

Fig. 1 shows a cross-section of a cheese vat of plastic materila raccording to the invention with an accessory gauze-type cheese vat inner mould;

Fig. 2 a part of a gauze-type inner mould with retaining means, as used in a cheese vat according to Fig. 1, on an enlarged scale;

Fig. 3 a cross-section of a cheese vat of plastic material with a supporting ring mating with the outside of the cheese vat;

Fig. 4 a part of such a supporting ring;

Fig. 5 a cross-section of a part of a unit comprising a number of interconnected cheese vats according to the invention with a gauze-type cheese vat inner mould; and

Fig. 6 a follower suitable for a cheese vat according to the invention, partially in cross-section.

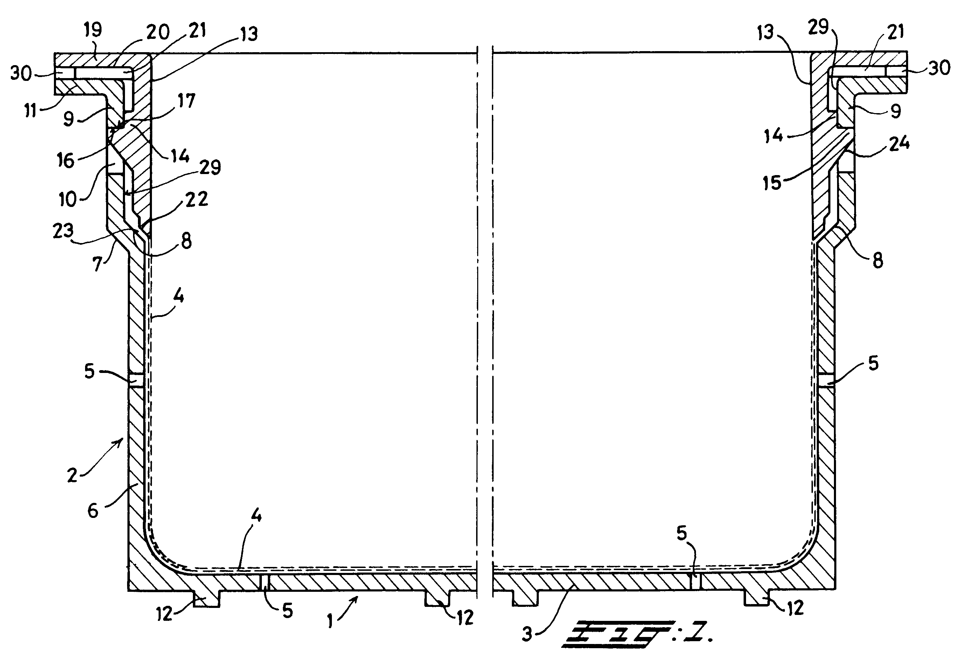

Fig. 1 shows a cheese vat 1, made in particular of poly olefin more particularly polypropylene

This cheese vat comprises a bottom 3 and a cylindrical upright wall 2, both of which are provided with whey discharge apertures 5.

On the inside of the cheese vat there is a removable moisture-permeable gauze-type cheese vat inner mould 4 which is obtained by deformation of a polypropylene gauze.

In order to permit the shaping of a round cheese in such a cheese vat, it can be advisable to round off the upright wall 2 in its bottom part 31 towards the bottom part 3.

The bottom vat wall part 6 of the upright vat wall 2 passes via an outside taper 7 and inside taper 8 into a vat wall top part 9 with greater internal and external diameter than the part 6, but having the same wall thickness as vat wall part 6. It will, however, be clear that the vat wall top part 9 can also have a different wall thickness from that of vat wall part 6. Bores 10 are distributed uniformly along the periphery in the vat wall top part 9.

An outwardly directed flat cheese vat top edge 11 abuts the vat wall top part 9.

The bottom 3 of the cheese vat 1 can be provided with circular reinforcement ribs 12.

The gauze-type inner mould 4 at its top side is moulded onto a retaining ring 13 bearing an outward-projecting top edge 19.

This top edge 19 carries on its bottom side 20 first lobes 30 being uniformly distributed along the periphery of the edge. These lobes are situated along the peripheral face of top edge 19.

The outside of the retaining ring 13 bears two lobes 14 with flat projecting parts 15 which snap into the above-mentioned bores 10. The top edges 16 of projecting parts 15 mate tightly with the edges 17 of the bores 10.

During the tight mating or clamping engagement of the cheese vat and the cheese vat inner mould, the two lobes 14 hold the outside of the retaining ring 13 a distance away from the inside 29 of the vat wall top part 9, while the first lobes 30 hold the bottom side 20 of the top edge 19 at a distance from the cheese vat top edge 11 while forming the flushing chamber 21.

When cheese vat and inner mould are mating, the bottom side 22 of the retaining ring 3 lies a distance from the inside taper 8, so that cleaning fluid placed in the flushing chamber 21 can flow away along the annular chamber 23.

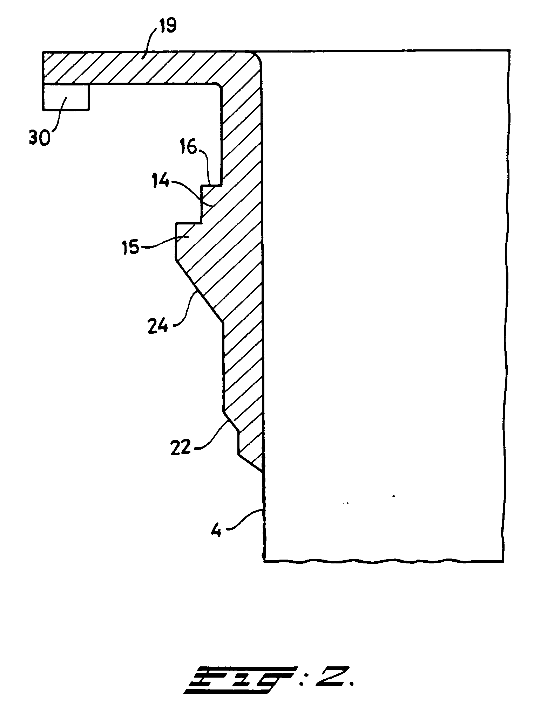

The projecting flat parts 15 are provided on the outside bottom side with a taper 24, which means that the retaining ring 3 can be pressed more easily into the cheese vat in order to make the flat parts 14 snap into the bores 10 (see Fig. 2).

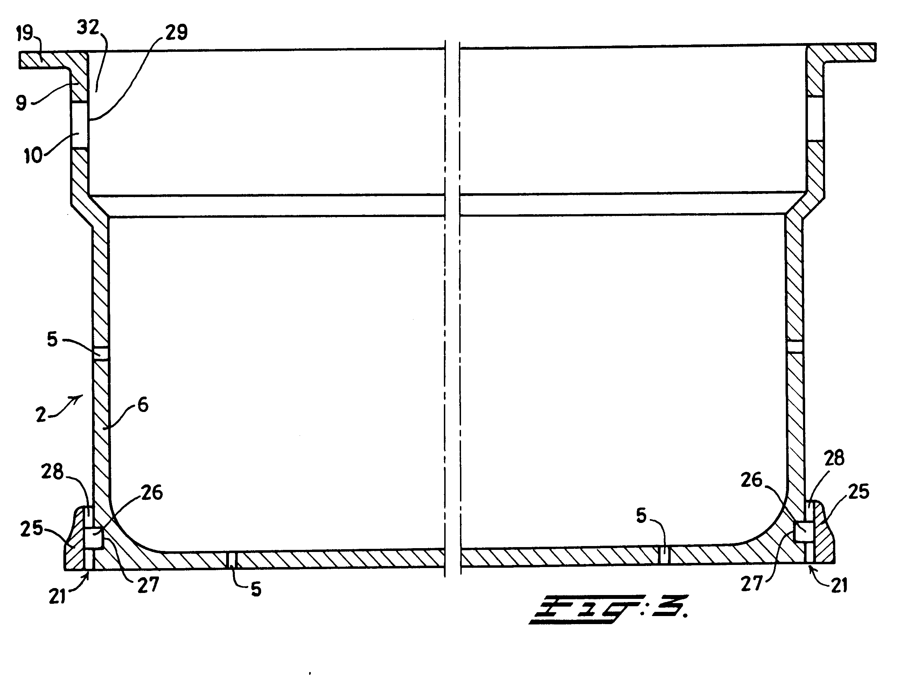

Fig. 3 shows the cheese vat 1 with a supporting ring 25 bearing supporting ring lobes 26 which snap into wall recesses 27 disposed on the outside of the upright wall 2.

The inside of the supporting ring 25 carries spacing ribs 28, and such a rib is also always provided above and below a supporting ring lobe 26. These spacing ribs 28 hold the inside 18 of the supporting ring 25 a distance away from the outside of the upright wall 2 while forming flushing chambers 21.

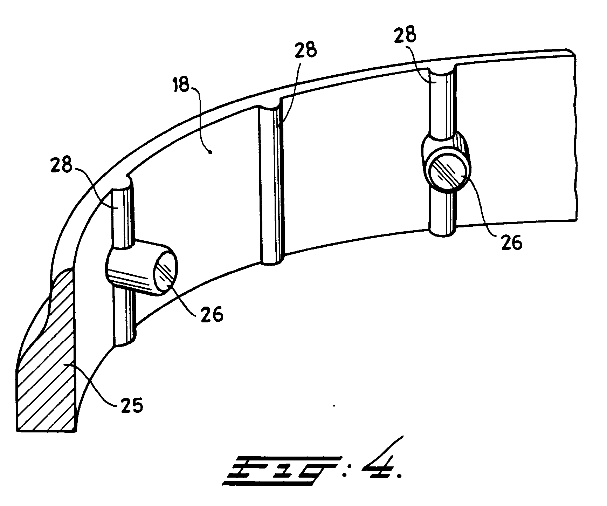

Fig. 4 shows a part of the supporting ring lobes 26 can be seen more clearly.

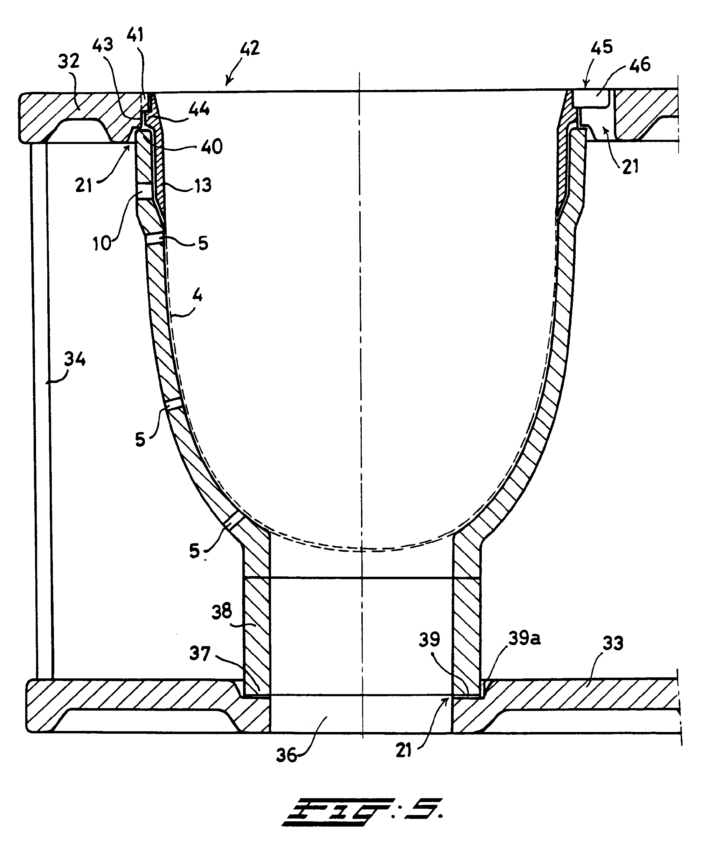

Fig. 5 shows a part of a unit comprising two plates 32 and 33 held apart by rods 34. A bottom edge 37 of the cylindrical bottom part 38 of a cheese vat 1 is placed in the edge of each aperture 36 in plate 33, while lobes 39 and lobes 39a again provide the flushing chamber 21.

The top side 40 of a cheese vat 1 is always fixed in the edge 41 of aperture 42 in the top plate 32. The peripheral wall of this aperture 42 is provided with a recess 43, in which a projecting edge 44 of retaining ring 13 can be tightly accommodated. The top side of the retaining ring 13 lies flush with the top side of the plate 32. Lobes 41 ensure the formation of flushing chambers 21.

The top side of the retaining ring can be provided with a lip 45 which is accommodated in a lip accommodation chamber 46. By pressing the lip 45 out of chamber 46, it is possible to remove the retaining ring 13 with inner mould 4.

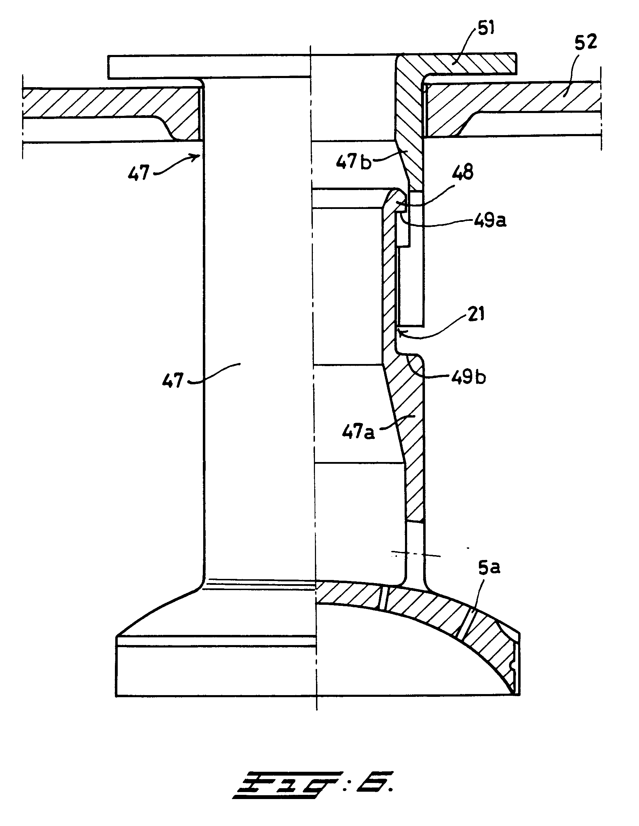

Fig. 6 shows, finally, a follower 47, provided with whey discharge apertures 5a, of an assembly of followers suitable for use in a unit according to Fig. 5. This follower 47, guided with pressure flange 51 in an aperture in plate 52, comprises a bottom follower part 47a and a top follower part 47b, which in this case are movable relative to each other. Lobe-shaped spacers 48 ensure flushing chambers 21 between follower parts 47a and 47b. The movement between parts 47a and 47b is bounded by stops 49a and 49b.

Of course, the follower parts 47a and 47b can also be firmly connected to each other, in which cases lobes act as spacers to form the flushing chambers.

## Claims

1. Cheese vat (1) of plastic material cooperating with at least one cheese vat accessory (4,13,25,32,33) secured to said cheese vat (1) in such a way that they are tightly connected by connecting means (15,26,44) and **characterised by** one or more flushing chambers (21) which are arranged in the immediate vicinity of the connecting means (15,26,44) between a cheese vat wall (2) and the nearest opposite wall part (13,18,41,38) of the cheese vat accessory (4,13,25,32,33).

2. Cheese vat according to claim 1, characterized in that at least one spacer (14; 30; 28) is present between a cheese vat wall part (9, 11) and the nearest opposite wall part (13, 19, 6) of a cheese vat accessory (4; 13; 25; 32, 33) thereby forming flushing chambers (21) between said two wall parts (9, 11; 13, 19)

3. Cheese vat according to claim 1 or 2, characterized in that the cheese vat accessory comprises a gauze-type inner mould (4) provided with connecting means (15) engaging into a recess (10) disposed in the wall of the cheese vat.

4. Cheese vat according to claim 3, characterized in that the connecting means (15) are disposed on a retaining ring (13) of inner mould (4) of a cheese vat, said ring (13) being accommodated in an annular chamber (23) on the top side of the cheese vat.

5. Cheese vat according to claim 4, characterized in that the annular chamber (23) is formed by a top part (9) of a wall of a cheese vat with a greater internal diameter than a bottom part (6) of said wall of a cheese vat.

6. Cheese vat according to any one of claims 1-5, characterized in that lobes (30) are present between the top side of a top wall (11) of a cheese vat and the bottom side (20) of a top edge (19) of said retaining ring thereby forming chambers (21).

7. Cheese vat according to any one of claims 1-6, characterized in that the connecting means (15, 26) of a cheese vat accessory (4, 13; 25) engaging into recesses (10; 27) are tapered on the outside.

8. Cheese vat according to any one of claims 1-7, characterized in that the cheese vat accessory is a supporting around ring (25) which is situated around the outside of the cheese vat and is provided with connecting means (26) which engage into recesses (27), while spacing ribs (28) form a flushing chamber (21) between the inside of the supporting ring (25) and the outside of the cheese vat (1).

9. Cheese vat according to any one of claims 1-8, characterized in that a plurality of cheese vats are accommodated in a unit comprising a bottom plate (33) and top plate (32) provided with apertures, flushing chambers (21) being formed at least between the bottom edge (37) of a cheese vat and the edge of an aperture (36) in bottom plate (33) and between the edge of an aperture in the top plate (32) and the nearest opposite part (44) of a retaining ring (13).

10. Follower (47) suitable for use in a cheese vat of plastic material according to one or more of the preceding claims, comprising a bottom follower part (47a) being connected to a top follower part (47b) by connecting means (48a, 49a, 48), characterized in that one or more flushing chambers (21) are arranged in the immediate vicinity of the connecting means between a wall of a bottom follower part (47a) and the nearest opposite wall part of the top follower part (47b).

**Patentansprüche**

1. Käseform (1) aus Kunststoff, die mit mindestens einem Käseformeinsatz (4, 13, 25, 32, 33) zusammenwirkt, der an der Käseform (1) derart befestigt ist, daß diese durch Verbindungsmittel (15, 26, 44) abgedichtet verbunden sind, **gekennzeichnet** durch eine oder mehrere Spülkammern (21), die in unmittelbarer Nähe der Verbindungsmittel (15, 26, 44) zwischen einer Wand (2) der Käseform und dem nächstliegenden, gegenüberliegenden Wandteil (13, 18, 41, 38) des Käseformeinsatzes (4, 13, 25, 32, 33) angeordnet sind.

2. Käseform nach Anspruch 1, dadurch **gekennzeichnet**, daß mindestens ein Abstandsstück (14, 30, 28) zwischen einem Wandteil (9, 11) der Käseform und dem nächstliegenden, gegenüberliegenden Wandteil (13, 19, 6) des Käseformeinsatzes (4, 13, 25, 32, 33) angeordnet ist und dadurch Spülkammern (21) zwischen den beiden Wandteilen (9, 11, 13, 19) geschaffen werden.

3. Käseform nach dem Anspruch 2 oder 3, dadurch **gekennzeichnet**, daß der Käseformeinsatz ein drahtgewebeartiges, inneres Formstück (4) aufweist, das mit Verbindungsmitteln (15) versehen ist, die in eine in der Wand der Käseform angeordneten Aussparung (10) eingreifen.

4. Käseform nach Anspruch 3, dadurch **gekennzeichnet**, daß die Verbindungsmittel (15) auf einem Haltering (13) des inneren Formstücks (4) der Käseform angeordnet sind, wobei der Ring (13) in einem ringförmigen Raum (23) im oberen Teil der Käseform aufgenommen ist.

5. Käseform nach Anspruch 4, dadurch **gekennzeichnet**, daß der ringförmige Raum (23) von einem oberen Bereich (9) einer Wand der Käseform gebildet wird, das einen größeren Innendurchmesser als der untere Teil (6) der Wand der Käseform aufweist.

6. Käseform nach mindestens einer der Ansprüchen 1 bis 5, dadurch **gekennzeichnet**, daß lappenartige Abstandshalter (30) zwischen der Oberseite der Deckwand (11) der Käseform und der Unterseite (20) des oberen Randes (19) des Halterings angeordnet ist und dadurch Kammern (21) gebildet werden.

7. Käseform nach mindestens einer der Ansprüchen 1 bis 6, dadurch **gekennzeichnet**, daß die in Aussparungen (10, 27) eingreifenden Verbindungsmittel (15, 26) des Käseformeinsatzes (4, 13, 25) sich an den Außenseiten verjüngen.

8. Käseform nach mindestens einer der Ansprüchen 1 bis 7, dadurch **gekennzeichnet**, daß der Käseformeinsatz als umlaufender Stützring (25) ausgebildet ist, welcher um die Außenseite der Käseform angeordnet und mit Verbindungsmitteln (26) versehen ist, die in Aussparungen (27) eingreifen, während Abstandsrippen (28) eine Spülkammer (21) zwischen der Innenseite des Halterings (25) und der Außenseite der Käseform (1) bilden.

9. Käseform nach mindestens einer der Ansprüchen 1 bis 8, dadurch **gekennzeichnet**, daß eine Anzahl von Käseformen in einer Einheit aufgenommen sind, die eine Bodenplatte (33) und eine Deckplatte (32), welche mit Öffnungen versehen ist aufweist, wobei Spülkammern (21) zumindest zwischen der Unterkante (37) der Käseform und dem Rand einer Öffnung (36) in der Bodenplatte (33) und zwischen dem Rand der Öffnung in der Deckplatte (32) und dem nächstgelegenen, gegenüberliegenden Teil eines Halteringes (13) ausgebildet sind.

10. Schachthülse (47) geeignet zur Verwendung in einer Käseform aus Kunststoff, nach einem oder mehreren der Ansprüche 1 bis 9, mit einem unteren Schacht (47a), der mit einem oberen Schacht (47b) durch Verbindungsmittel (48a, 49a, 48) verbunden ist, **gekennzeichnet** durch eine oder mehrere Spülkammern (21), die in der unmittelbaren Nähe der Verbindungsmittel zwischen einer Wand des unteren Schachtteils (47a) und dem nächstliegenden, gegenüberliegenden Wandteil des oberen Schachtteils (47b) angeordnet sind.

## Revendications

1. Moule à fromage (1) en matière plastique coopérant avec au moins un accessoire de moule à fromage (4,13,25,32,33) fixé audit moule à fromage (1), de telle sorte que l'accessoire et le moule sont étroitement raccordés par des moyens de raccordement (15,26,44), et caractérisé par une ou plusieurs chambres de rinçage (21), qui sont disposées au voisinage immédiat des moyens de raccordement (15,26,44) entre une paroi (2) du moule à fromage et l'élément de paroi opposé le plus proche (13,18,41,38) de l'accessoire (4,13,25,32,33) du moule à fromage.

2. Moule à fromage selon la revendication 1, caractérisé en ce qu'au moins une entretoise (14;30;28) est présente entre un élément de paroi (9,11) du moule à fromage et l'élément de paroi opposé le plus proche (13,19,6) de l'accessoire (4;13;25;32,33) du moule à fromage, de manière à former des chambres de rinçage (21) entre lesdits deux éléments de paroi (9,11; 13,19).

3. Moule à fromage selon la revendication 1 ou 2, caractérisé en ce que l'accessoire du moule à fromage comporte un moule intérieur du type formé d'une gaze (4), équipé de moyens de raccordement (15) s'engageant dans un renfoncement (10) ménagé dans la paroi du moule à fromage.

4. Moule à fromage selon la revendication 3, caractérisé en ce que les moyens de raccordement (15) sont disposés sur une bague de retenue (13) du moule intérieur (4) du moule à fromage, ladite bague (13) étant logée dans une chambre annulaire (23) ménagée dans la face supérieure du moule à fromage.

5. Moule à fromage selon la revendication 4, caractérisé en ce que la chambre annulaire (23) est formée par une partie supérieure (9) d'une paroi d'un moule à fromage possédant un diamètre intérieur supérieur à celui d'une partie inférieure (6) de ladite paroi d'un moule à fromage.

6. Moule à fromage selon l'une quelconque des revendications 1-5, caractérisé en ce que des bossages (30) sont présents entre le côté supérieur d'une paroi supérieure (11) d'un moule à fromage et le côté inférieur (20) d'un bord supérieur (19) de ladite bague de retenue, en formant de ce fait des chambres (21).

7. Moule à fromage selon l'une quelconque des revendications 1-6, caractérisé en ce que les moyens de raccordement (15,26) d'un accessoire (4,13;25) du moule à fromage, qui s'engagent dans des renfoncements (10;27), ont une forme rétrécie en direction de l'extérieur.

8. Moule à fromage selon l'une quelconque des revendications 1-7, caractérisé en ce que l'accessoire du moule à fromage est une bague circonférentielle de support (25) qui est disposée sur l'extérieur du moule à fromage et est équipée de moyens de raccordement (26), qui s'engagent dans des renfoncements (27), tandis que des nervures d'entretoisement (26) forment une chambre de rinçage (21) entre l'intérieur de la bague de support (25) et l'extérieur du moule à fromage (1).

9. Moule à fromage selon l'une quelconque des revendications 1-8, caractérisé en ce qu'une pluralité de moules à fromage sont logés dans une unité comprenant une plaque inférieure (33) et une plaque supérieure (32) pourvues d'ouvertures, des chambres de rinçage (21) étant formées au moins entre le bord inférieur (37) d'un moule à fromage et le bord d'une ouverture (36) ménagée dans la plaque de base (33) et entre le bord d'une ouverture dans la plaque supérieure (32) et la partie opposée à la plus proche (44) d'une bague de retenue (13).

10. Piston (47) convenant pour être utilisé dans un moule à fromage en matière plastique selon une ou plusieurs des revendications précédentes, comprenant une partie inférieure (47a) raccordée à une partie supérieure (47b) par des moyens de raccordement (46a,49a,48), caractérisé en ce qu'une ou plusieurs chambres de rinçage (21) sont disposées au voisinage immédiat des moyens de raccordement entre une paroi d'une partie inférieure (47a) du piston et l'élément de paroi opposé le plus proche de la partie supérieure (47b) du piston.

FIG. 1.

EP 0 379 752 B1

FIG: 2.

_Fig:3._

EP 0 379 752 B1

28

28

18

28

28

26

26

25

FIG: 4.

Fig.5.

_Fig:6._